# EUROPEAN PATENT SPECIFICATION

(11) **EP 4 190 869 B1**
(45) Date of publication and mention of the grant of the patent: **25.02.2026**
(21) Application number: 21211872.3
(22) Date of filing: 02.12.2021
(51) Int. Cl.: C09D 11/38, C09D 11/50, G01N 31/22

(54) **A PRINTING METHOD FOR TIME TEMPERATURE INDICATORS**
DRUCKVERFAHREN FÜR ZEIT-TEMPERATUR-ANZEIGER
PROCÉDÉ D'IMPRESSION POUR DES INDICATEURS DE TEMPÉRATURE ET DE TEMPS

(43) Date of publication of application: 07.06.2023
(73) Proprietor: AGFA-GEVAERT NV, 2640 Mortsel (BE)
(72) Inventor: LOCCUFIER, Johan, 2640 Mortsel (BE); VAN DINGENEN, Wim, 2640 Mortsel (BE)
(74) Representative: Goethals, Fabienne

(56) References cited:
- EP-A1- 3 670 616
- US-A1- 2003 103 905
- XULI CHEN ET AL: "Magnetochromatic Polydiacetylene by Incorporation of Fe3O4 Nanoparticles", ANGEWANDTE CHEMIE, WILEY - V C H VERLAG GMBH & CO. KGAA, DE, vol. 123, no. 24, 9 May 2011 (2011-05-09), pages 5600 - 5603, XP071348216, ISSN: 0044-8249, DOI: 10.1002/ANGE.201100064

## Description

### Technical field of the Invention

The present invention relates to printing technology for monitoring sensors for the food and pharmaceutical logistic chain.

### Background art for the invention

A significant percentage of food is wasted throughout the logistic chain from producer to the end customer resulting in a considerable negative environmental impact.

Therefore, there is a need for an optimal monitoring of the logistic flow of food and pharmaceuticals to minimize waste, especially for cold chain monitoring.

Several monitoring systems are disclosed in the prior art, going from chemistry based visual monitoring to packaging integrated electronics.

Most of these monitoring systems have been integrated in labels making them too expensive for general packaging applications on one hand and not fraud proof on the other hand. For general applicability there is a need for cheaper and more fraud proof solutions.

Diacetylenes have been proposed for the design of sensors. Diacetylenes are known to polymerize topochemically when the diacetylene molecules are ordered in a specific crystal lattice. Polymerization of diacetylenes by irradiation with deep UV radiation results in a blue chromophore. The diacetylenes may be designed in such a way that the resulting polymer becomes stimuli responsive, yielding a magenta chromophore upon responding to the stimulus. The stimulus may be, for example, heat, moisture, pH or a specific target molecule. For these reasons diacetylenes may be used to design so-called Time Temperature Indicators (TTIs), as disclosed in for example US20040253733, US20050003551 and US8067483 (all from Temptime Corporation).

Several diacetylene based inkjet inks have been disclosed in the prior art.

Printing with solvent based inkjet inks comprising a broad scope of colour changing indicators, including temperature, has been disclosed in the examples of US20030103905, US20020034475 and WO2002000920 (Segan Industries Inc.). However, from a toxicological point of view solvent based inks are not preferred in an food packaging environment. On top of that, the disclosed solvents are generally low boiling solvents, inevitably leading to reliability problems on industrial printing systems. Such reliability problems may result in down times of the printing lines or slowing down the printing lines.

Several micelle based approaches have been disclosed in the prior art. EP3670616 (Xerox Corporation) discloses an aqueous ink based on carboxy terminated diacetylenes dispersed in water where the diacetylene dispersion further contains an additional alkyl group based additive (alkyl amine, alkyl alcohol, alkyl thiol or PEG based alkyl surfactant) to further tune the blue to red transition of the polymerized diacetylenes. Micelle based systems however have a tendency for film formation upon drying at the nozzle limiting the printing reliability. When using the system for cold chain monitoring, low melting point components have to be used, further enhancing the tendency for film formation.

There is thus a need for a reliable, cheap and fraud proof broad temperature range monitoring system.

There is also a need for an intrinsically reliable ink design, allowing to monitor a broad range of temperatures from well below zero on.

### Summary of the invention

It is an object of the invention to provide a printing ink combining a good printing reliability and a broad range temperature monitoring.

This object is realized with a printing ink comprising a core-shell particle as defined in claim 1.

It has been found that the object of the invention could be realized by decoupling the sensor function from the ink environment by encapsulating diacetylenes in a core-shell particle.

It is a further object of the invention to provide a reliable, cheap and fraud proof broad temperature range monitoring system.

Further objects of the invention will become apparent from the description hereinafter.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C1 to C6-alkyl group.

Unless otherwise specified a substituted or unsubstituted alkenyl group is preferably a C2 to C6-alkenyl group.

Unless otherwise specified a substituted or unsubstituted alkynyl group is preferably a C2 to C6-alkynyl group.

Unless otherwise specified a substituted or unsubstituted alkaryl group is preferably a phenyl or naphthyl group including one, two, three or more C1 to C6-alkyl groups.

Unless otherwise specified a substituted or unsubstituted aralkyl group is preferably a C7 to C20-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, amine, carboxylic acid, thiocarboxylic acid, ether, thioether, ketone, aldehyde, sulfoxide, sulfone, sulfonate ester, sulphonamide, -Cl, -Br, -I, -OH, -SH, -CN and -NO₂.

### Core-shell particle

A core-shell particle referred to herein includes a so-called core surrounded by a shell, typically a polymeric shell. Such a core-shell particle is often referred to as a nanocapsule or microcapsule depending on its average particle size.

The core of the core-shell particle according to the present invention includes a diacetylene compound as described below.

The core-shell particle is preferably prepared by interfacial polymerization as described below.

The core-shell particles preferably have an average particle size, determined by dynamic laser diffraction, of 4 µm or less, more preferably from 0.05 up to 2 µm, most preferably from 0.1 up to 1 µm.

When the average particle size of the core-shell particle is 2 µm or less, excellent inkjet printing resolution and dispersion stability with time may be realized.

In a particularly preferred embodiment, the core-shell particles are dispersed using a dispersing group covalently bonded to the shell or are dispersed by using dispersants or surfactants preferably added during or after the formation of the core-shell particles. The dispersing group covalently bonded to the polymeric shell is preferably selected from the group consisting of a carboxylic acid or salt thereof, a sulfonic acid or salt thereof, a phosphoric acid ester or salt thereof, a phosphonic acid or salt thereof, an ammonium group, a sulfonium group, a phosphonium group and a polyethylene oxide group.

### Diacetylene compound

The diacetylene compound has a chemical structure according to Formula I, 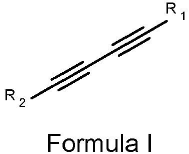 wherein
R₁ and R₂ are independently selected from the group consisting of a substituted or unsubstituted alkyl group, a substituted or unsubstituted alkenyl group, a substituted or unsubstituted alkynyl group, a substituted or unsubstituted aralkyl group, a carboxylic acid and a thiocarboxylic acid.

At least one of R₁ and R₂ is preferably substituted with a functional group selected from the group consisting of a hydroxyl group, an ester, an amide, a urea and a carbamate.

In a specific embodiment, the diacetylene compound according to the present invention is a symmetrical diacetylene, meaning that R₁ = R₂.

R₁ and R₂ more preferably represent a substituted or unsubstituted alkyl group.

In another preferred embodiment, the diacetylene compound has a chemical structure according to Formula II, 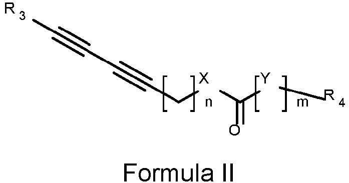 wherein
R₃ is selected from the group consisting of a substituted or unsubstituted alkyl group, a substituted or unsubstituted alkenyl group, a substituted or unsubstituted alkynyl group and a substituted or unsubstituted aralkyl group;
R₄ is selected from the group consisting of a hydrogen, a substituted or unsubstituted alkylgroup, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
X and Y are independently selected from the group consisting of an oxygen atom, a sulfur atom and N-H;
n represent an integer from 2 up to 16;
m represent 0 or 1.

Typical structures according to Formula II are listed in Table 1, without being limited thereto.

**Table 1**

| | |
|---|---|
| 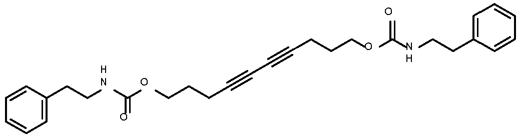 | DA-1 |
| 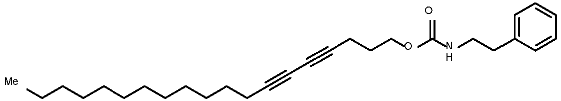 | DA-2 |
| 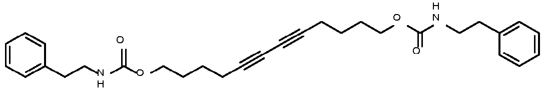 | DA-3 |
| 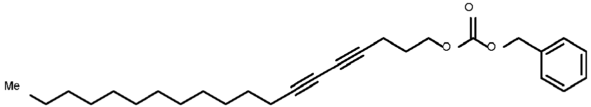 | DA-4 |
| 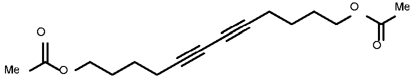 | DA-5 |
| 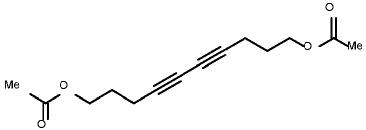 | DA-6 |
| 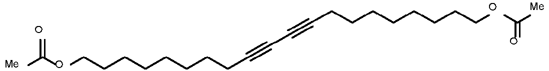 | DA-7 |
| 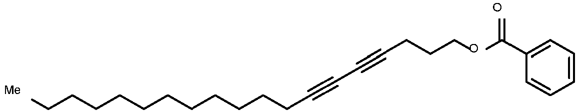 | DA-8 |
| 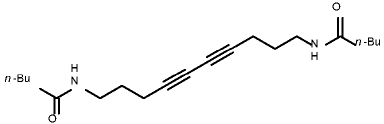 | DA-9 |
| 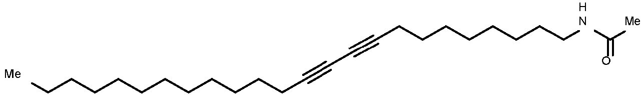 | DA-10 |
| 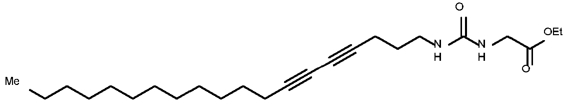 | DA-11 |

In another preferred embodiment, the diacetylene compound has a chemical structure according to Formula III, 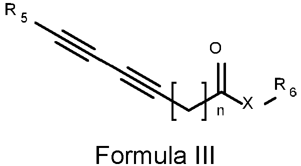 wherein
R₅ is selected from the group consisting of a substituted or unsubstituted alkyl group, a substituted or unsubstituted alkenyl group, a substituted or unsubstituted alkynyl group and a substituted or unsubstituted aralkyl group;
R₆ is selected from the group consisting of a hydrogen, a substituted or unsubstituted alkylgroup, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
X is selected from the group consisting of an oxygen atom, a sulfur atom and N-H;
n represent an integer from 2 up to 16.

Typical structures according to Formula III are listed in Table 2, without being limited thereto.

**Table 2**

| | |
|---|---|
| 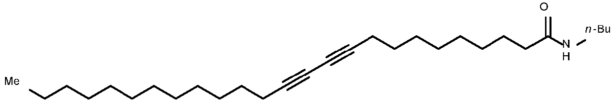 | DA-12 |
| 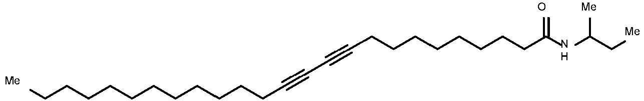 | DA-13 |
| 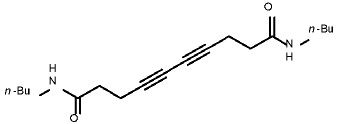 | DA-14 |
| 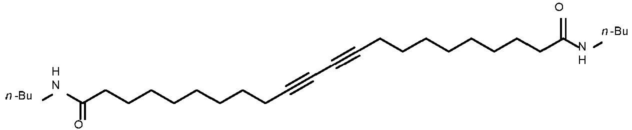 | DA-15 |
| 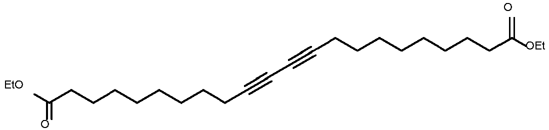 | DA-16 |
| 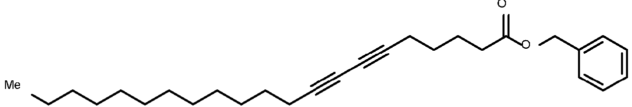 | DA-17 |

In still another preferred embodiment, the diacetylene has a chemical structure according to Formula IV, 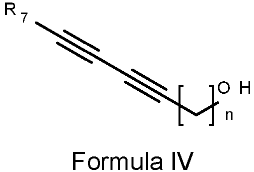 wherein
R₇ is selected from the group consisting of a substituted or unsubstituted alkyl group, a substituted or unsubstituted alkenyl group, a substituted or unsubstituted alkynyl group and a substituted or unsubstituted aralkyl group;
n represent an integer from 2 to 16.

Typical structures according to Formula IV are listed in Table 3, without being limited thereto.

**Table 3**

| | |
|---|---|
| 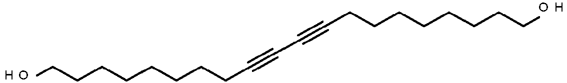 | DA-18 |
| 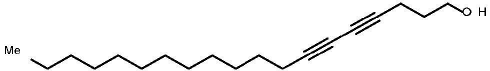 | DA-19 |
| 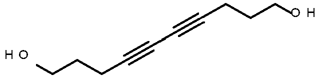 | DA-20 |
| 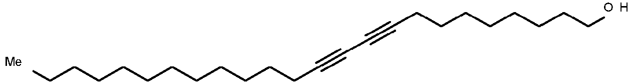 | DA-21 |

### Interfacial polymerization

Interfacial polymerization is preferably used to prepare the core-shell particles according to the present invention.

This technique is well-known and has been reviewed by Zhang Y. and Rochefort D. (Journal of Microencapsulation, 29(7), 636-649 (2012) and by Salitin (in Encapsulation Nanotechnologies, Vikas Mittal (ed.), chapter 5, 137-173 (Scrivener Publishing LLC (2013)).

In interfacial polymerization, such as interfacial polycondensation, two reactants meet at the interface of emulsion droplets and react rapidly.

In general, interfacial polymerization requires the dispersion of an oleophilic phase in an aqueous continuous phase or vice versa. Each of the phases contains at least one dissolved monomer (a first shell component) that is capable of reacting with another monomer (a second shell component) dissolved in the other phase. Upon polymerization, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerization. The core-shell particles according to the present invention are preferably prepared from an oleophilic dispersion in an aqueous continuous phase.

Typical polymeric shells of the core-shell particles according to the invention formed by interfacial polymerization are selected from the group consisting of polyamides, typically prepared from di- or polyacid chlorides as first shell component and di- or oligoamines as second shell component, polyurea, typically prepared from di- or oligo-isocyanates as first shell component and di- or oligo-amines as second shell component, polyurethanes, typically prepared from di- or oligo-isocyanates as first shell component and di- or oligo-alcohols as second shell component, polysulfonamides, typically prepared from di- or oligo-sulfochlorides as first shell component and di- or oligo-amines as second shell component, polyesters, typically prepared from di- or oligo-acid chlorides as first shell component and di- or oligo-alcohols as second shell component and polycarbonates, typically prepared from di- or oligo-chloroformates as first shell component and di- or oligo-alcohols as second shell component. The shell can also be composed of combinations of these polymers.

In a further embodiment, polymers, such as gelatine, chitosan, albumin and polyethylene imine can be used as second shell components in combination with a di- or oligio-isocyanate, a di- or oligo acid chloride, a di- or oligo-chloroformate and an epoxy resin as first shell component.

In a particularly preferred embodiment, the shell is composed of a polyurea or a combination thereof with a polyurethane. In another preferred embodiment, the shell is a poly(aminoacid) based shell formed by interfacial ring opening polymerization of N-carboxy-anhydrides.

In a further preferred embodiment, a water immiscible solvent is used in the dispersion step, which is removed by solvent stripping before or after the shell formation. In a particularly preferred embodiment, the water immiscible solvent has a boiling point below 100°C at normal pressure. Esters are particularly preferred as water immiscible solvent.

A water immiscible solvent is an organic solvent having low miscibility in water. Low miscibility is defined as any water solvent combination forming a two phase system at 20°C when mixed in a one over one volume ratio.

### Inkjet liquid

The core-shell particles described above are preferably formulated into an aqueous inkjet liquid. The inkjet liquid can be used as ink, primer or varnish.

An inkjet ink referred to is inkjet liquid comprising a colorant while an inkjet varnish does not include a colorant. An inkjet primer is typically provided on a substrate followed by providing an inkjet ink or varnish on that primer. The primer may optimize the adhesion towards, the penetration in or the resolution of the inkjet ink or varnish.

The inkjet liquid preferably includes 45 wt % or less of the core-shell particles, more preferably from 5 up to 25 wt.%, based on the total weight of the inkjet liquid.

It was observed that inkjet printing with inkjet liquid comprising more than 30 wt% of the core-shell particles was not always reliable.

The viscosity of the inkjet liquid is preferably 25 mPa.s or less, more preferably from 2 up to 15 mPa.s, measured at 25°C and at a shear rate of 90 s⁻¹.

The surface tension of the inkjet liquid is preferably from 18 mN/m up to 70 mN/m at 25°C, more preferably from 20 mN/m up to 40 mN/m at 25°C.

The aqueous medium of the inkjet liquid contains water, but preferably further includes one or more water-soluble organic solvents.

Suitable solvents which can be incorporated in the inks are polyols (for example ethylene glycol; glycerine; 2-ethyl-2-(hydroxymethyl)-1; 3-propanediol; tetraethylene glycol; triethylene glycol; tripropylene glycol; 1,2,4-butanetriol; diethylene glycol; propylene glycol; dipropylene glycol; butyleneglycol; 1,6-hexanediol; 1,2-hexanediol; 1,5-pentanediol; 1,2-pentanediol; 2,2-dimethyl-1,3-prapanediol; 2-methyl-2,4-pentanediol; 3-methyl-1,5-pentanediol; 3-methyl-1,3-butanediol; and 2-methyl-1,3-propanediol); amines (for example ethanolamine and 2-(dimethyl-amino)ethanol); monohydric alcohols (for example methanol, ethanol, and butanol); alkyl ethers of polyhydric alcohols (for example diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, and dipropylene glycol monomethyl ether); 2,2'-thiodiethanol; amides (for example N,N-dimethylformamide); heterocycles (for example 2-pyrrolidone and N-methyl-2-pyrrolidone); and acetonitrile.

The inkjet liquid may comprise colorants, such as pigments, but is preferably colorless.

The pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH, 2004. ISBN 3527305769.

Suitable pigments are disclosed in paragraphs [0128] to [0138] of WO 2008/074548.

The inkjet liquid may comprise a resin, also referred to as a binder. The resin is often added to the inkjet ink formulation to optimize the adhesion to the substrate. The resin is typically a polymer and suitable resins can be acrylic based resins, a urethane-modified polyester resin or a polyethylene wax.

The concentration of the resin in the inkjet liquid is preferably from 0 to 30 wt%, more preferably from 0 to 20 wt%, most preferably from 0 to 10 wt%, all based on the total weight of the inkjet liquid,

The inkjet liquid may further comprise a humectant.

Humectants typically prevent the clogging of nozzles. The prevention is due to its ability to slow down the evaporation rate of the inkjet liquid, especially the water of the ink. The humectant is preferably an organic solvent having a higher boiling point than water. Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof. A preferred humectant is glycerol.

The humectant is preferably added to the inkjet liquid in an amount of 0.1 up to 20 wt% based on the total weight of the inkjet liquid.

The inkjet ink may also contain at least one surfactant for obtaining good spreading characteristics on a substrate.

Any known surfactant may be used but preferably a glycol surfactant and/or an acetylene alcohol surfactant. The use of the acetylene glycol surfactant and/or the acetylene alcohol surfactant further reduces bleeding to improve printing quality, and also improves the drying property in printing to allow high-speed printing.

The acetylene glycol surfactant and/or the acetylene alcohol surfactant is preferably one or more selected from 2,4,7,9-tetramethyl-5-decine-4,7-diol; alkylene oxide adducts of 2,4,7,9-tetramethyl-5-decine-4,7-diol; 2,4-dimethyl-5-decin-4-ol and alkylene oxide adducts of 2,4-dimethyl-5-decin-4-ol. These are available, for example, from Air Products (GB) as Olfine (registered trademark) 104 series and E series, such as Olfine E1010, or from Nissin Chemical Industry as Surfynol (registered trademark) 465 and Surfynol 61.

The inkjet ink may further contain at least one pH adjuster. Suitable pH adjusters include organic amines, NaOH, KOH, NEt₃, NH₃, HCl, HNO₃ and H₂SO₄. In a preferred embodiment, the inkjet ink has a pH from 5 up to 8.

### Method of preparing a packaging comprising a Time Temperature Indicator

A method of preparing a packaging comprising a Time Temperature Indicator (TTI) comprises the steps of:
a) jetting and drying an aqueous inkjet liquid as described above on at least part of a packaging material; and
b) exposing the jetted and dried inkjet liquid to UV radiation.

Drying is preferably carried out by applying heat. The drying temperature is preferably at least 30°C, more preferably at least 40°C, most preferably at least 60°C.

The UV radiation preferably has an emission wavelength from 220 up to 300 nm, more preferably from 240 up to 270 nm, most preferably of 254 nm.

The jetted and dried inkjet liquid is preferably cooled down before exposing it to UV radiation in step b).

The dried inkjet liquid is preferably cooled down to at least 10°C, more preferably to at least 0°C, most preferably to at least -20°C. For specific cases however a cooling to - 78°C or even -196°C may be required.

Heating may be carried out by forced-air drying, radiation heating such as IR radiation, conduction heating, high-frequency drying, microwave drying or a combination thereof.

A preferred inkjet head for jetting the inkjet liquid is a piezoelectric inkjet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of inkjet liquid from the inkjet head. However, the jetting of the inkjet liquid is not restricted to piezoelectric inkjet printing. Other inkjet print heads may be used, such as a continuous type, a thermal print head type, a MEM-jet type head and a valve jet type.

The packaging made from the packaging material containing the TTI may be a primary, secondary or tertiary packaging.

Primary packaging is the packaging in direct contact with the product itself. The main purpose of primary packaging is to contain, protect and/or preserve the finished product, particularly against contamination. It is the smallest unit of distribution or use.

A secondary packaging is mainly used for branding display and logistical purposes. It also protects and collates individual units during storage.

Tertiary packaging is used for bulk handling, warehouse storage and transport shipping.

The TTI is preferably applied on a primary or a secondary packaging, most preferably on a primary packaging.

There is no real limitation on the type packaging material. The packaging material may be selected from plastic, glass, paper or card board.

The packaging material may be unprimed or a primed.

The packaging material may be transparent, translucent or opaque.

The packaging material may be selected from textile, paper, leather, card board, polyethylene, polypropylene, polycarbonate, polyvinyl chloride, polyesters like polyethylene terephthalate (PET), polyethylene naphthalate (PEN), polylactide (PLA), polymethylmethacrylate or polyimide.

The substrate may also be a paper substrate, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The Time Temperature Indicator (TTI) according to the present invention may be used to monitor the accumulated time-temperature history of a product. Such monitoring is important for products which may no longer be used or become less effective when they are exposed to higher temperatures during a certain period of time.

A TTI according to the present invention irreversible changes its colour resulting from the cumulative effects of time and temperature and therefore provides visual information that is easily accessible. The customer can judge from the visual information whether the product may be deteriorated and thus still usable for its application or not.

A preferred temperature range that may be monitored with a TTI according to the present invention is from -78 °C up to 30 °C, more preferably from -20 °C up to 5 °C.

The TTI is preferably used on food, pharmaceutical, and medical products.

The TTI is preferably used for food packaging.

### Examples

### Methods

### TLC-MS

The molecular mass was determined using TLC-MS, according to the following procedure. A TLC was run under circumstances given in the synthetic examples. The TLC was analyzed using a CAMAG^{™} TLC-MS interface coupled to an AmaZon^{™} SL mass spectrometer (supplied by Brüker Daltonics) via an Agilent^{™} 1100 HPLC pump.

First a blank spectrum was taken by eluting a spot on the TLC plate where no compounds are present with a 0.01 molar solution of ammonium acetate in methanol.

A second spectrum of the compound to be analyzed was taken by eluting the spot of the compound under consideration with a 0.01 molar solution of ammonium acetate in methanol. The first spectrum was subtracted from the second spectrum, giving the spectrum of the compound to be analyzed.

### Materials

All materials used in the following examples were readily available from standard sources such as ALDRICH CHEMICAL Co. (Belgium) and ACROS (Belgium) unless otherwise specified. The water used was deionized water.

**Desmodur N75 BA** is a trifunctional isocyanate supplied by Bayer AG.

**Reaxis C708** is a bismuth-zinc carboxylate catalyst supplied by Will and Co.

**SURF-1** is a 30 w% solution of an amino functionalized surfactant according to the following structure: 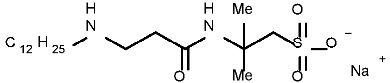 SURF-1 was prepared according to the following procedure: 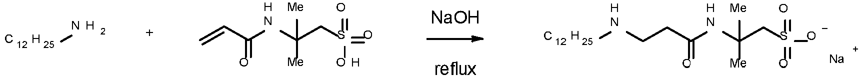 111 g (0.6 mol) dodecyl amine and 124 g (0.6 mol) 2-acrylamide-2-methylpropane sulfonic acid were dissolved in a mixture of 400 ml water and 30 ml butanol. 72.7 g of a 33 w% solution of NaOH was added (0.6 mol). The reaction mixture was refluxed for 24 hours. The reaction mixture was allowed to cool down to room temperature. The reaction mixture was diluted with water to obtain a 30 w% solution of SURF-1.

**SURF-2** is a solution of 71.4 g Tivida FL 2500, supplied by Merck, in 250 g ethanol and 678.6 g water.

**SUB-1** is is a carton substrate (XLL MM X-liner lite supplied by MM Katron), primed by coating 4 µm of a primer, having a composition according to Table 4. After coating, the primer was dried for 2 minutes at 60°C.

**Table 4**

| **Component (wt%)** | **Primer** |
|---|---|
| **Resin 1** | 17.78 |
| **Kauropal 933** | 0.04 |
| **TEGO FOAMEX 822** | 0.04 |
| **WAX-1** | 8 |
| **50 w% solution of Mg(NO₃).6H₂O in water** | 22.50 |
| **Synperonic PE-P105-SS** | 1 |
| **1,2-propane diol** | 19 |
| **1,2-hexane diol** | 2.85 |
| **Water** | 28.79 |

### Example 1

In this example the diacetylene compounds DA-2, DA-7, DA-12 and DA-13 were synthesized.

### The synthesis of nonadeca-4,6-diynyl N-(2-phenylethyl)carbamate (DA-2)

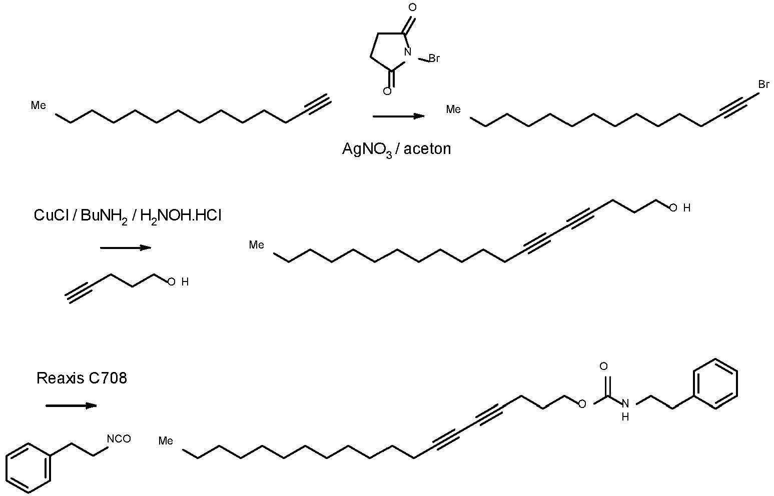

### The synthesis of 1-bromotetradec-1-yne

8.93 g (45 mmol) tetradec-1-yne was dissolved in 60 ml acetone. 10. 02 g (56 mmol) N-bromo-succinimid and 7.65 g (45 mmol) silver nitrate were added and the reaction was allowed to continue for two hours at room temperature. The suspension was added to 300 ml of an ice-water mixture. The mixture was extracted with 500 ml isopropyl acetate. The mixture was extracted a second time with 300 ml isopropyl acetate. The pooled isopropyl acetate fractions were washed with 150 ml water, dried over MgSO₄ and evaporated under reduced pressure.

1-bromotetradec-1-yne was obtained as a light yellow oil. A small residue in the oil was removed by filtration. 10.2 g of 1-bromotetradec-1-yne was isolated (y : 83%). 1-bromotetradec-1-yne was analyzed by TLC on a Analtech HPTLC-RP18F plate, supplied by Miles Scientific, using methanol/1 M NaCl 95/5 as eluent (Rf : 0.29).

### The synthesis of nonadeca-4,6-diyn-1-ol

41 mg (0.4 mmol) CuCl was added to 32 ml of a 30 w% aqueous solution of n.-butylamine (0.13 mol). 5 mg hydroxyl amine chlorohydrate was added, upon which the blue colour of the solution disappeared. 0.687 g (8 mmol) 4-pentyn-1-ol was added. The reaction mixture was cooled to 5°C. A solution of 2.623 g (9.6 mmol) 1-bromotetradec-1-yne in 16 ml methyl t.butyl ether was added over 22 minutes while decolourizing the reaction mixture by the addition of small portions of hydroxyl amine chlorohydrate. The reaction mixture was allowed to warm to room temperature and the reaction mixture was continuously decolourized by the addition of small portions of hydroxyl amine chlorohydrate. The reaction was allowed to continue for two hours at room temperature. The reaction mixture was quenched by the addition of 59 ml of a 2N HCl-solution to obtain a pH of 2. The reaction mixture was extracted with 150 ml isopropyl acetate. The isopropyl acetate fraction was washed with 100 ml brine, dried over MgSO₄ and evaporated under reduced pressure.

Nonadeca-4,6-diyn-1-ol was obtained as slightly coloured crystals. 1.66 g of nonadeca-4,6-diyn-1-ol was obtained (y : 75%). Nonadeca-4,6-diyn-1-ol was analyzed with TLC-chromatography on a TLC Silica gel 60F254-plate, supplied by Merck, using methylene chloride/ethyl acetate 90/10 as eluent. (Rf : 0.51). The structure was further confirmed, using the TL-MS method described above.

### The synthesis of nonadeca-4,6-diynyl N-(2-phenylethyl)carbamate

2.764 g (10 mmol) nonadeca-4,6-diyn-1-ol was dissolved in 20 ml ethyl acetate. 0.131 g Reaxis C708 was added, followed by the dropwise addition of a solution of 1.802 g (12 mmol) phenetyl isocyanate in 10 ml ethyl acetate. The reaction mixture was heated to 60°C and the reaction was allowed to continue for 2 hours at 60°C. After cooling down to room temperature, the solvent was partially removed under reduced pressure until nonadeca-4,6-diynyl N-(2-phenylethyl)carbamate started to crystallize. Upon addition of n-hexane, nonadeca-4,6-diynyl N-(2-phenylethyl)carbamate fully crystallized. Nonadeca-4,6-diynyl N-(2-phenylethyl)carbamate was isolated by filtration and dried. 3.54 g of nonadeca-4,6-diynyl N-(2-phenylethyl)carbamate was isolated (y : 84%, m.p. : 71°C). Nonadeca-4,6-diynyl N-(2-phenylethyl)carbamate was analyzed with TLC-chromatography on a TLC Silica gel 60F254-plate, supplied by Merck, using methylene chloride as eluent. (Rf : 0.44). The structure was further confirmed, using the TL-MS method described above.

### The synthesis of 20-acetoxyicosa-9,11-diynyl acetate (DA-7)

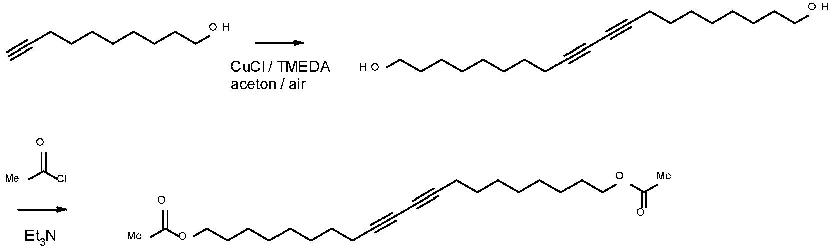

### The synthesis of icosa-9,11-diyne-1,20-diol

14.77 g (0.09 mol) 9-decyn-1-ol and 4.59 g (0.045 mol) CuCl were added to 325 ml acetone. 20.92 g (0.18 mol) tetramethyl ethylene diamine was added and air was bubbled through the reaction mixture for 7 hours while stirring at room temperature. An additional 2.30 g (0.022 mol) CuCl was added and the reaction mixture was stirred for 80 hours at room temperature. An additional 2.30 g (0.022 mol) CuCl and 80 mg water was added and the reaction mixture was stirred for an additional 24 hours. The catalyst was removed by filtration and the solvent was removed under reduced pressure. 100 ml water was added to the residue and the precipitated icosa-9,11-diyne-1,20-diol was isolated by filtration, washed with 50 ml water and dried. A first fraction of 6 g icosa-9,11-diyne-1,20-diol was isolated. The pooled water filtrates were extracted once with 250 ml isopropyl acetate and twice with 100 ml isopropyl acetate. The pooled isopropyl acetate fractions were dried over MgSO₄ and the solvent was evaporated under reduced pressure. An extra 3.9 g of icosa-9,11-diyne-1,20-diol was isolated. Both fractions icosa-9,11-diyne-1,20-diol were pooled and dissolved in methylene chloride. Upon addition of n-hexane, icosa-9,11-diyne-1,20-diol crystallized from the medium.

Icosa-9,11-diyne-1,20-diol was isolated by filtration and dried. 9.35 g of icosa-9,11-diyne-1,20-diol was isolated (y : 68%). Icosa-9,11-diyne-1,20-diol was analyzed with TLC-chromatography on a TLC Silica gel 60F254-plate, supplied by Merck, using methylene chloride/ethyl acetate 70/30 as eluent. (Rf : 0.17). The structure was further confirmed, using the TL-MS method described above.

### The synthesis of 20-acetoxyicosa-9,11-diynyl acetate

9.20 g (30 mmol) icosa-9,11-diyne-1,20-diol was dissolved in 180 ml methylene chloride. 7.67 g (75 mmol) triethyl amine was added, followed by the addition of a solution of 6.01 g (75 mmol) acetyl chloride in 10 ml methylene chloride, while maintaining the temperature below 20°C. The cooling was stopped and the temperature rose to 28°C. The reaction was allowed to continue for 1 hour at room temperature. The precipitated salts were removed by filtration and the methylene chloride solution was extracted with 400 ml brine. The methylene chloride fraction was dried over MgSO₄ and evaporated under reduced pressure. The oily residue was redissolved in a minimum of methylene chloride followed by the addition of n-hexane. The precipitated residues were removed by filtration and the solution was evaporated under reduced pressure. The oily residue slowly crystallized upon cooling.

11.72 g of 20-acetoxyicosa-9,11-diynyl acetate was isolated (y : 93%). 20-acetoxyicosa-9,11-diynyl acetate was analyzed with TLC-chromatography on a TLC Silica gel 60F254-plate, supplied by Merck, using methylene chloride as eluent. (Rf : 0.5, tailing). The structure was further confirmed, using the TL-MS method described above.

### The synthesis of N-butylpentacosa-10,12-diynamide (DA-12):

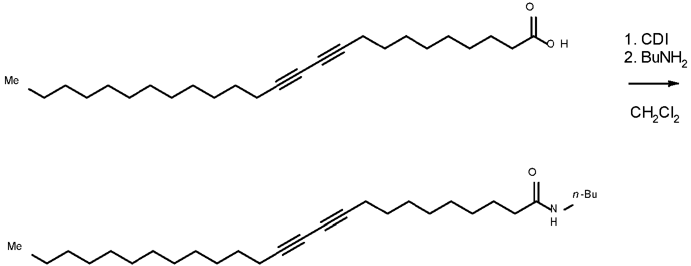

11.47 g (30 mmol) pentacosa-10,12-diynoic acid was dissolved in 80 ml methylene chloride. A small red coloured residue of polymerized pentacosa-10, 12-diynoic acid was removed by filtration. The solution was cooled to 8°C. A solution of 4.86 g (30 mmol) carbodiimidazole in 50 ml methylene chloride was added to the reaction mixture while maintaining the temperature below 8°C. A solution of 2.194 g (30 mmol) n-butylamine in 10 ml methylene chloride was added over 15 minutes and the reaction was allowed to continue for two and a half hours at 0°C. 800 ml methylene chloride was added to the reaction mixture and the mixture was extracted with 200 ml water. An additional 800 ml methylene chloride was added to the isolated methylene chloride fraction and the mixture was extracted twice with 200 ml water. The methylene chloride fraction was dried over MgSO₄ and evaporated under reduced pressure.

10.79 g of N-butylpentacosa-10,12-diynamide was isolated as a crystalline compound (y : 84%, m.p. : 70°C). N-butylpentacosa-10,12-diynamide was analyzed with TLC-chromatography on a TLC Silica gel 60F254-plate, supplied by Merck, using methylene chloride/ethyl acetate 80/20 as eluent. (Rf : 0.64). The structure was further confirmed, using the TL-MS method described above. To avoid polymerization in the solid state, N-butylpentacosa-10,12-diynamide was stored as a 20 w% solution of N-butylpentacosa-10,12-diynamide in methylene chloride.

### The synthesis of N-sec-butylpentacosa-10,12-diynamide (DA-13):

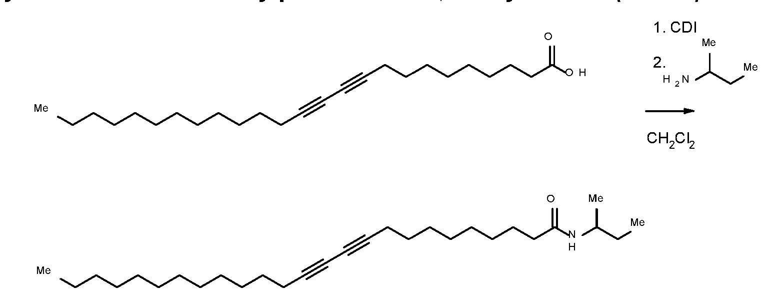

11.47 g (30 mmol) pentacosa-10,12-diynoic acid was dissolved in 80 ml methylene chloride. A small red coloured residue of polymerized pentacosa-10, 12-diynoic acid was removed by filtration. The solution was cooled to 8°C. A solution of 4.86 g (30 mmol) carbodiimidazole in 50 ml methylene chloride was added to the reaction mixture while maintaining the temperature below 8°C. A solution of 2.194 g (30 mmol) sec-butylamine in 10 ml methylene chloride was added over 15 minutes and the reaction was allowed to continue for two and a half hours at 0°C, followed by reaction at room temperature for 16 hours. The reaction mixture was extracted twice with 100 ml of a 1 N HCl-solution. The isolated methylene chloride fraction was diluted with an additional 100 ml methylene chloride and extracted with 140 ml of a saturated Na₂CO₃ solution. The isolated methylene chloride fraction was further diluted with 300 ml methylene chloride and extracted with 140 ml of a saturated Na₂CO₃ solution and with 100 ml water. The isolated methylene chloride fraction was dried over MgSO₄ and evaporated under reduced pressure. The isolated N-sec-butylpentacosa-10,12-diynamide was redissolved in methylene chloride and small residues of polymerized N-sec-butylpentacosa-10,12-diynamide were removed by filtration. 9.7 g of N-sec-butylpentacosa-10,12-diynamide was isolated (y : 75%, m.p. : 68°C). N-sec-butylpentacosa-10,12-diynamide was analyzed with TLC-chromatography on a TLC Silica gel 60F254-plate, supplied by Merck, using methylene chloride/ethyl acetate 80/20 as eluent. (Rf : 0.67). The structure was further confirmed, using the TL-MS method described above. To avoid polymerization in the solid state, N-sec-butylpentacosa-10,12-diynamide was stored as a 12 w% solution of N-sec-butylpentacosa-10,12-diynamide in methylene chloride/methanol 95/5.

### Example 2

In this example capsules CAP-1 to CAP-4 were prepared comprising respectively the diacetylene compounds DA-2, DA-7, DA-12 and DA-13).

### Preparation CAP-1

3.044 g Desmodur N75 BA was added to 14.57 g of a 17 w% solution of **DA-2** in ethyl acetate. A second solution of 2.298 g SURF-1, 0.238 g lysine and 0.325 g triethanol amine in 22.2 g water was prepared. The ethyl acetate solution of DA-2 was added to the aqueous solution, while stirring with an Ultra Turrax at a rotation speed 16000 rpm for 8 minutes. 27 g water was added and the solvent was removed under reduced pressure, while gradually reducing the pressure to 25 mbar. The weight of the capsule dispersion was adjusted to 25 g. 0.174 g tetraethylene pentamine was dissolved in 5 ml water and added dropwise to the capsule dispersion. The dispersion was heated to 60°C and the reaction was allowed to continue for 16 hours at 60°C. The reaction mixture was allowed to cool down to room temperature and the dispersion was filtered over a 2.7 µm filter.

The average particle size was measured using a Zetasizer^{™} Nano-S (Malvern Instruments, Goffin Meyvis). The average particle size was 188 nm.

### Preparation CAP-2

3.044 g Desmodur N75 BA was added to 12.39 g of a 20 w% solution of **DA-7** in ethyl acetate. A second solution of 2.298 g SURF-1, 0.238 g lysine and 0.325 g triethanol amine in 22.2 g water was prepared. The ethyl acetate solution of DA-7 was added to the aqueous solution, while stirring with an Ultra Turrax at a rotation speed 18000 rpm for 8 minutes. 22.2 g water was added and the solvent was removed under reduced pressure, while gradually reducing the pressure to 25 mbar. The weight of the capsule dispersion was adjusted to 25 g. 0.174 g tetraethylene pentamine was dissolved in 5 ml water and added dropwise to the capsule dispersion. The dispersion was heated to 60°C and the reaction was allowed to continue for 16 hours at 60°C. The reaction mixture was allowed to cool down to room temperature and the dispersion was filtered over a 2.7µm filter.

The average particle size was measured using a Zetasizer^{™} Nano-S (Malvern Instruments, Goffin Meyvis). The average particle size was 214 nm.

### Preparation CAP-3

3.044 g Desmodur N75 BA was added to 13.61 g a 20 w% solution of **DA-12** in methylene chloride. A second solution of 2.298 g SURF-1, 0.238 g lysine and 0.325 g triethanol amine in 24 g water was prepared. The methylene chloride solution of DA-12 was added to the aqueous solution, while stirring with an Ultra Turrax at a rotation speed 12000 rpm for 8 minutes. 24 g water was added and the solvent was removed under reduced pressure, while gradually reducing the pressure to 25 mbar. The weight of the capsule dispersion was adjusted to 30 g. The dispersion was heated to 60°C and the reaction was allowed to continue for 16 hours at 60°C. The reaction mixture was allowed to cool down to room temperature and the dispersion was filtered over a 2.7µm filter.

The average particle size was measured using a Zetasizer^{™} Nano-S (Malvern Instruments, Goffin Meyvis). The average particle size was 380 nm.

### Preparation CAP-4

3.044 g Desmodur N75 BA was added to 24.77 g a 12 w% solution of **DA-13** in methylene chloride/methanol 95/5. A second solution of 2.298 g SURF-1, 0.238 g lysine and 0.325 g triethanol amine in 46g water was prepared. The methylene chloride solution of DA-13 was added to the aqueous solution, while stirring with an Ultra Turrax at a rotation speed 18000 rpm for 8 minutes. 22.2 g water was added and the solvent was removed under reduced pressure, while gradually reducing the pressure to 25 mbar. The weight of the capsule dispersion was adjusted to 25 g. 0.174 g tetraethylene pentamine was dissolved in 5 ml water and added dropwise to the capsule dispersion. The dispersion was heated to 60°C and the reaction was allowed to continue for 16 hours at 60°C. The reaction mixture was allowed to cool down to room temperature and the dispersion was filtered over a 2.7µm filter.

The average particle size was measured using a Zetasizer^{™} Nano-S (Malvern Instruments, Goffin Meyvis). The average particle size was 355 nm.

### Example 3

In this example the inkjet inks INK-1 to INK-4 were prepared by mixing the components according to Table 4. All weight percentages are based on the total weight of the inkjet inks.

**Table 4**

| **Component (wt%)** | **INK-1** | **INK-2** | **INK-3** | **INK-4** |
|---|---|---|---|---|
| CAP-1 | 60 | - | - | - |
| CAP-2 | - | 60 | - | - |
| CAP-3 | - | - | 60 | - |
| CAP-4 | - | - | - | 60 |
| Ethylene glycol | 39 | = | = | = |
| SURF-2 | 1 | 1 | 1 | 1 |

The inks were filtered over a 2.7 µm filter.

### Example 4

In this example the Time Temperature Indicators TTI-1 to TTI-4 were prepared by printing the inkjet inks INK-1 to INK-4 on a substrate shown in Table 5.

**Table 5**

| **TTI** | **INK** | **Substrate** |
|---|---|---|
| TTI-1 | INK-1 | SUB-1 |
| TTI-2 | INK-2 | SUB-1 |
| TTI-3 | INK-3 | SUB-1 |
| TTI-4 | INK-4 | SUB-1 |

A solid area (TTI) on the substrate was printed using a standard Dimatix^{™} 10 pl print head. The inks were jetted at 22°C using a firing frequency of 5 kHz, a firing voltage of 25 V and a standard waveform.

When using SUB-1 as substrate, the substrate temperature was increased to 40°C before jetting the inkjet inks. The jetted inks were dried at 40°C.

The substrate including TTI-1 was cooled to -78°C on dry ice. The printed substrate was allowed to warm to room temperature and exposed to a 254 nm lamp for one minute. Upon exposure to the UV-radiation, TTI-1 turned dark blue. The sample was then heated at 150°C for one minute upon which TTI-1 turned magenta. Upon cooling down to room temperature, the sensor switched back to blue. The printed sensor TTI-1 proved to be useful as a temperature indicator in the high temperature range.

The substrate including TTI-2 was cooled to -78°C on dry ice and exposed to a 254 nm lamp for one minute. Upon exposure to the UV-radiation, TTI-2 turned blue. The dry ice was removed and the printed sensor was slowly heated to room temperature. Upon heating to room temperature the senor turned from blue to pink-orange. Trying to switch the sensor back to the blue state by cooling back to -78°C failed. The printed sensor TTI-2 proved to be an irreversible temperature sensor suitable for monitoring sub-zero temperatures irreversibly.

The substrate including TTI-3 was cooled to -78°C. The substrate was allowed to warm to room temperature and exposed to a 254 nm lamp for one minute. Upon exposure to the UV-radiation, the printed image turned blue. The image was then heated to 80°C, upon which the image turned magenta. Upon cooling the printed image remained magenta. The printed sensor TTI-3 proved to be an irreversible temperature sensor suitable for monitoring the medium temperature range.

The substrate including TTI-4 was cooled to -78°C on dry ice. The printed substrate was allowed to warm to room temperature and exposed to a 254 nm lamp for one minute. Upon exposure to the UV radiation, the printed image turned purple. The printed substrate was gradually heated to 100°C and kept at 100°C for one minute upon which the printed image turned orange-brown. The colour started to switch from 70°C on. Once fully switched, it proved to be impossible to reverse the colour switch upon cooling. The printed sensor TTI-4 proved to be an irreversible temperature sensor suitable for monitoring the 70°C to 100°C range.

## Claims

1. A core-shell particle including a diacetylene compound according to Formula I, 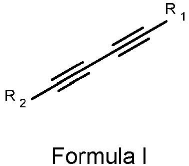 wherein
R₁ and R₂ are independently selected from the group consisting of a substituted or unsubstituted alkyl group, a substituted or unsubstituted alkenyl group, a substituted or unsubstituted alkynyl group, a substituted or unsubstituted aralkyl group,
wherein the core-shell particle is a nano-or microcapsule and wherein the core includes the diacetylene compound.

2. The core-shell particle according to claim 1 wherein the diacetylene compound has a chemical structure according to Formula II, 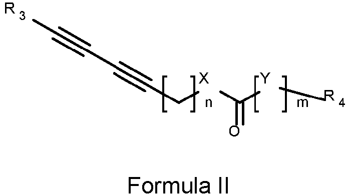 wherein
R₃ is selected from the group consisting of a substituted or unsubstituted alkyl group, a substituted or unsubstituted alkenyl group, a substituted or unsubstituted alkynyl group and a substituted or unsubstituted aralkyl group;
R₄ is selected from the group consisting of a hydrogen, a substituted or unsubstituted alkylgroup, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
X and Y are independently selected from the group consisting of an oxygen atom, a sulfur atom and N-H;
n represent an integer from 2 up to 16;
m represent 0 or 1.

3. The core-shell particle according to claim 1 wherein the diacetylene compound has a chemical structure according to Formula III, 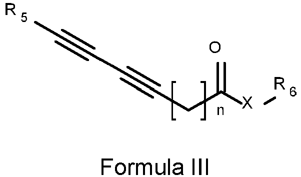 wherein
R₅ is selected from the group consisting of a substituted or unsubstituted alkyl group, a substituted or unsubstituted alkenyl group, a substituted or unsubstituted alkynyl group and a substituted or unsubstituted aralkyl group;
R₆ is selected from the group consisting of a hydrogen, a substituted or unsubstituted alkylgroup, a substituted or unsubstituted alkenyl group, a substituted or unsubstituted alkynyl group, a substituted or unsubstituted aralkyl group, a substituted or unsubstituted alkaryl group and a substituted or unsubstituted aryl or heteroaryl group;
X is selected from the group consisting of an oxygen atom, a sulfur atom and N-H; n represent an integer from 2 up to 16.

4. The core-shell particle according to claim 1 wherein the diacetylene compound has a chemical structure according to Formula IV, 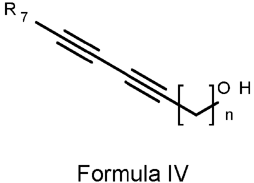 wherein
R₇ is selected from the group consisting of a substituted or unsubstituted alkyl group, a substituted or unsubstituted alkenyl group, a substituted or unsubstituted alkynyl group and a substituted or unsubstituted aralkyl group;
n represent an integer from 2 up to 16.

5. The core-shell particle according to any of the preceding claims having an average particle size, measured by dynamic laser diffraction, from 0.05 up to 2 µm.

6. The core-shell particle according to any of the preceding claims prepared by interfacial polymerization.

7. An inkjet liquid comprising a core-shell particle as defined in any of the claims 1 to 6.

8. The inkjet liquid according to claim 7 wherein the amount of the core-shell particle is from 5 up to 25 wt%, based on the total weight of the inkjet ink.

9. The inkjet liquid according to claim 7 or 8 further comprising at least one component selected from the group consisting of a humectant, a co-solvent, a penetrant, a wetting agent, a viscosity regulator, a resin and a pigment dispersion

10. A method of providing a Time Temperature Indicator (TTI) on a packaging material comprising the steps of:
a) jetting and drying an inkjet liquid as defined in any of the claims 7 to 9 on at least part of a packaging material; and
b) exposing the jetted and dried inkjet liquid to UV radiation.

11. The method according to claim 10 wherein the jetted and dried inkjet liquid is cooled down before exposing it to UV radiation.

12. The method according to claim 11 wherein the jetted and dried inkjet liquid is cooled down to at least 10 °C.

13. The method according to any of the claims 10 to 12 wherein the UV radiation has a wavelength from 220 up to 300 nm.

14. A packaging material including a TTI prepared according to any of the claims 10 to 13.

15. A packaging material according to claim 14 used for food, pharmaceutical and medical products.

## Patentansprüche

1. Ein Kern-Hülle-Partikel, enthaltend eine Diacetylenverbindung gemäß Formel I, 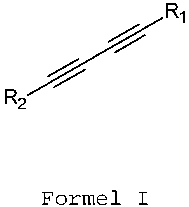 in der
R₁ und R₂ unabhängig voneinander aus der Gruppe bestehend aus einer substituierten oder nicht-substituierten Alkylgruppe, einer substituierten oder nicht-substituierten Alkenylgruppe, einer substituierten oder nicht-substituierten Alkynylgruppe und einer substituierten oder nicht-substituierten Aralkylgruppe ausgewählt werden,
wobei das Kern-Hülle-Partikel eine Nanokapsel oder Mikrokapsel ist und wobei der Kern die Diacetylenverbindung enthält.

2. Das Kern-Hülle-Partikel nach Anspruch 1, wobei die Diacetylenverbindung eine chemische Struktur gemäß Formel II aufweist, 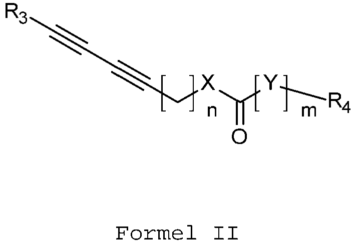 in der
R₃ aus der Gruppe bestehend aus einer substituierten oder nicht-substituierten Alkylgruppe, einer substituierten oder nicht-substituierten Alkenylgruppe, einer substituierten oder nicht-substituierten Alkynylgruppe und einer substituierten oder nicht-substituierten Aralkylgruppe ausgewählt wird,
R₄ aus der Gruppe bestehend aus Wasserstoff, einer substituierten oder nicht-substituierten Alkylgruppe, einer substituierten oder nicht-substituierten Alkenylgruppe, einer substituierten oder nicht-substituierten Alkynylgruppe, einer substituierten oder nicht-substituierten Aralkylgruppe, einer substituierten oder nicht-substituierten Alkarylgruppe und einer substituierten oder nicht-substituierten Arylgruppe oder Heteroarylgruppe ausgewählt wird,
X und Y unabhängig voneinander aus der Gruppe bestehend aus einem Sauerstoffatom, einem Schwefelatom und N-H ausgewählt werden, n eine ganze Zahl von 2 bis 16 bedeutet,
m 0 oder 1 bedeutet.

3. Das Kern-Hülle-Partikel nach Anspruch 1, wobei die Diacetylenverbindung eine chemische Struktur gemäß Formel III aufweist, 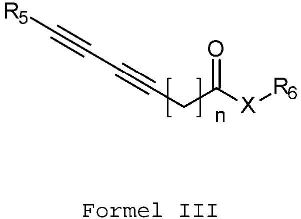 in der
R₅ aus der Gruppe bestehend aus einer substituierten oder nicht-substituierten Alkylgruppe, einer substituierten oder nicht-substituierten Alkenylgruppe, einer substituierten oder nicht-substituierten Alkynylgruppe und einer substituierten oder nicht-substituierten Aralkylgruppe ausgewählt wird,
R₆ aus der Gruppe bestehend aus Wasserstoff, einer substituierten oder nicht-substituierten Alkylgruppe, einer substituierten oder nicht-substituierten Alkenylgruppe, einer substituierten oder nicht-substituierten Alkynylgruppe, einer substituierten oder
nicht-substituierten Aralkylgruppe, einer substituierten oder nicht-substituierten Alkarylgruppe und einer substituierten oder nicht-substituierten Arylgruppe oder Heteroarylgruppe ausgewählt wird,
X aus der Gruppe bestehend aus einem Sauerstoffatom, einem Schwefelatom und N-H ausgewählt wird,
n eine ganze Zahl von 2 bis 16 bedeutet.

4. Das Kern-Hülle-Partikel nach Anspruch 1, wobei die Diacetylenverbindung eine chemische Struktur gemäß Formel IV aufweist, 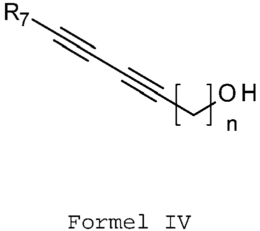 in der
R₇ aus der Gruppe bestehend aus einer substituierten oder nicht-substituierten Alkylgruppe, einer substituierten oder nicht-substituierten Alkenylgruppe, einer substituierten oder nicht-substituierten Alkynylgruppe und einer substituierten oder nicht-substituierten Aralkylgruppe ausgewählt wird,
n eine ganze Zahl von 2 bis 16 bedeutet.

5. Das Kern-Hülle-Partikel nach einem der vorstehenden Ansprüche, das eine durch dynamische Laserbeugung gemessene mittlere Partikelgröße von 0,05 bis 2 µm aufweist.

6. Das Kern-Hülle-Partikel nach einem der vorstehenden Ansprüche, das durch Grenzflächenpolymerisation hergestellt wird.

7. Eine Tintenstrahlflüssigkeit, die ein wie in einem der Ansprüche 1 bis 6 definiertes Kern-Hülle-Partikel enthält.

8. Die Tintenstrahlflüssigkeit nach Anspruch 7, wobei die Menge des Kern-Hülle-Partikels zwischen 5 Gew.-% und 25 Gew.-%, bezogen auf das Gesamtgewicht der Tintenstrahlflüssigkeit, liegt.

9. Die Tintenstrahlflüssigkeit nach Anspruch 7 oder 8, die ferner mindestens eine Komponente, ausgewählt aus der Gruppe bestehend aus einem Feuchthaltemittel, einem Colösungsmittel, einem Eindringmittel, einem Netzmittel, einem Viskositätsregler, einem Harz und einer Pigmentdispersion, enthält.

10. Ein Verfahren zum Bereitstellen eines Zeit-Temperatur-Anzeigers (TTI, *Time-Temperature-Indicator*) auf einem Verpackungsmaterial, das die folgenden Schritte umfasst:
a) Aufspritzen und Trocknen einer wie in einem der Ansprüche 7 bis 9 definierten Tintenstrahlflüssigkeit auf mindestens einen Teil eines Verpackungsmaterials, und
b) Belichten der aufgespritzten und getrockneten Tintenstrahlflüssigkeit mittels UV-Strahlung.

11. Das Verfahren nach Anspruch 10, wobei die aufgespritzte und getrocknete Tintenstrahlflüssigkeit vor seiner Belichtung mit UV-Strahlung abgekühlt wird.

12. Das Verfahren nach Anspruch 11, wobei die aufgespritzte und getrocknete Tintenstrahlflüssigkeit auf eine Temperatur von mindestens 10°C abgekühlt wird.

13. Das Verfahren nach einem der Ansprüche 10 bis 12, wobei die UV-Strahlung eine Wellenlänge zwischen 220 nm und 300 nm aufweist.

14. Ein Verpackungsmaterial, das einen nach einem der Ansprüche 10 bis 13 hergestellten TTI-Anzeiger enthält.

15. Ein Verpackungsmaterial nach Anspruch 14, das für Lebensmittelprodukte, pharmazeutische Produkte und medizinische Produkte verwendet wird.

## Revendications

1. Particule de type cœur-enveloppe contenant un composé de diacétylène répondant à la Formule I, 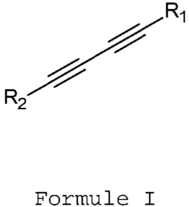 où
R₁ et R₂ sont choisis, indépendamment l'un de l'autre, parmi le groupe composé d'un groupe alkyle substitué ou non substitué, d'un groupe alcényle substitué ou non substitué, d'un groupe alcynyle substitué ou non substitué et d'un groupe aralkyle substitué ou non substitué,
**caractérisée en ce que** la particule de type cœur-enveloppe est une nanocapsule ou une microcapsule et que le cœur contient le composé de diacétylène.

2. Particule de type cœur-enveloppe selon la revendication 1, **caractérisée en ce que** le composé de diacétylène présente une structure chimique répondant à la Formule II, 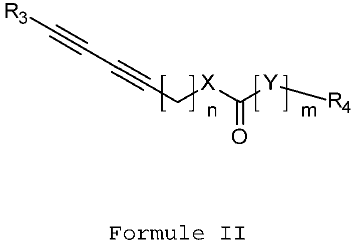 où
R₃ est choisi parmi le groupe composé d'un groupe alkyle substitué ou non substitué, d'un groupe alcényle substitué ou non substitué, d'un groupe alcynyle substitué ou non substitué et d'un groupe aralkyle substitué ou non substitué,
R₄ est choisi parmi le groupe composé d'hydrogène, d'un groupe alkyle substitué ou non substitué, d'un groupe alcényle substitué ou non substitué, d'un groupe alcynyle substitué ou non substitué, d'un groupe aralkyle substitué ou non substitué, d'un groupe alcaryle substitué ou non substitué et d'un groupe aryle ou hétéroaryle substitué ou non substitué,
X et Y sont choisis, indépendamment l'un de l'autre, parmi le groupe composé d'un atome d'oxygène, d'un atome de soufre et de N-H,
n représente un nombre entier de 2 à 16,
m représente 0 ou 1.

3. Particule de type cœur-enveloppe selon la revendication 1, **caractérisée en ce que** le composé de diacétylène présente une structure chimique répondant à la Formule III, 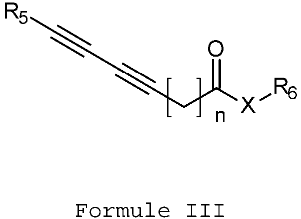 où
R₅ est choisi parmi le groupe composé d'un groupe alkyle substitué ou non substitué, d'un groupe alcényle substitué ou non substitué, d'un groupe alcynyle substitué ou non substitué et d'un groupe aralkyle substitué ou non substitué,
R₆ est choisi parmi le groupe composé d'hydrogène, d'un groupe alkyle substitué ou non substitué, d'un groupe alcényle substitué ou non substitué, d'un groupe alcynyle substitué ou non substitué, d'un groupe aralkyle substitué ou non substitué, d'un groupe alcaryle substitué ou non substitué et d'un groupe aryle ou hétéroaryle substitué ou non substitué,
X est choisi parmi le groupe composé d'un atome d'oxygène, d'un atome de soufre et de N-H,
n représente un nombre entier de 2 à 16.

4. Particule de type cœur-enveloppe selon la revendication 1, **caractérisée en ce que** le composé de diacétylène présente une structure chimique répondant à la Formule IV, 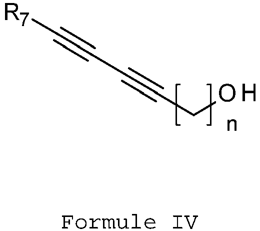 où
R₇ est choisi parmi le groupe composé d'un groupe alkyle substitué ou non substitué, d'un groupe alcényle substitué ou non substitué, d'un groupe alcynyle substitué ou non substitué et d'un groupe aralkyle substitué ou non substitué,
n représente un nombre entier de 2 à 16.

5. Particule de type cœur-enveloppe selon l'une quelconque des revendications précédentes présentant une granulométrie moyenne comprise entre 0,05 et 2 µm, telle que mesurée par diffraction laser dynamique.

6. Particule de type cœur-enveloppe selon l'une quelconque des revendications précédentes préparée par polymérisation interfaciale.

7. Liquide de jet d'encre contenant une particule de type cœur-enveloppe telle que définie dans l'une quelconque des revendications 1 à 6.

8. Liquide de jet d'encre selon la revendication 7, **caractérisé en ce que** la quantité de la particule de type cœur-enveloppe est comprise entre 5% en poids et 25% % en poids par rapport au poids total du liquide de jet d'encre.

9. Liquide de jet d'encre selon la revendication 7 ou 8 contenant en outre au moins un composant choisi parmi le groupe composé d'un humectant, d'un co-solvant, d'un agent pénétrant, d'un agent mouillant, d'un régulateur de viscosité, d'une résine et d'une dispersion de pigment.

10. Procédé pour la mise à disposition d'un indicateur temps-température (TTI, *Time-Temperature-Indicator*) sur un matériau d'emballage, ledit procédé comprenant les étapes consistant à:
a) projeter et sécher un liquide de jet d'encre tel que défini dans l'une quelconque des revendications 7 à 9 sur au moins une partie du matériau d'emballage, et
b) exposer le liquide de jet d'encre projeté et séché à du rayonnement ultraviolet.

11. Procédé selon la revendication 10, **caractérisé en ce que** le liquide de jet d'encre projeté et séché est refroidi avant d'être exposé à du rayonnement ultraviolet.

12. Procédé selon la revendication 11, **caractérisé en ce que** le liquide de jet d'encre projeté et séché est refroidi à une température d'au moins 10°C.

13. Procédé selon l'une quelconque des revendications 10 à 12, **caractérisé en ce que** le rayonnement ultraviolet présente une longueur d'onde comprise entre 220 nm et 300 nm.

14. Matériau d'emballage comprenant un indicateur temps-température fabriqué selon l'une quelconque des revendications 10 à 13.

15. Matériau d'emballage selon la revendication 14 utilisé pour des produits alimentaires, des produits pharmaceutiques et des produits médicaux.
